**Europäisches Patentamt**

**European Patent Office**

**Office européen des brevets**

(11) Veröffentlichungsnummer: **0 344 337 B1**

# (12) EUROPÄISCHE PATENTSCHRIFT

(45) Veröffentlichungstag der Patentschrift: **11.12.91**

(51) Int. Cl.⁵: **G01F 23/02**

(21) Anmeldenummer: **88108581.5**

(22) Anmeldetag: **28.05.88**

(54) **Flüssigkeitsstandanzeiger.**

(43) Veröffentlichungstag der Anmeldung:
**06.12.89 Patentblatt 89/49**

(45) Bekanntmachung des Hinweises auf die
Patenterteilung:
**11.12.91 Patentblatt 91/50**

(84) Benannte Vertragsstaaten:
**AT BE DE ES FR GB IT NL**

(56) Entgegenhaltungen:
**FR-A- 996 279**
**GB-A- 1 138 757**
**US-A- 3 817 205**

(73) Patentinhaber: **Klinger AG**
**Baarerstrasse 10**
**CH-6301 Zug(CH)**

(72) Erfinder: **Betti,Fausto**
**Via Linati, 8**
**Mailand(IT)**

(74) Vertreter: **Sparing Röhl Henseler Patentanwälte European Patent Attorneys
Rethelstrasse 123
W-4000 Düsseldorf 1(DE)**

## Beschreibung

Die Erfindung betrifft einen Flüssigkeitsstandanzeiger mit zwei in Längsrichtung unter Pressung aneinanderliegenden prismatischen Plattenteilen, von denen der vordere aus Glas und die unter Bildung eines nach außen abgedichteten Flüssigkeitskanals in einem rohrförmigen Gehäuse angeordnet sind, mit zwei seitlichen, die abdichtende Preßkraft übertragenden Gehäuseteilen, deren abgewinkelte Vorderkanten mit der außenliegenden ebenen Schaufläche der Glasplatte und deren Hinterkanten mit einer Preßschrauben aufnehmenden Druckplatte zusammenwirken. Anzeiger dieser Art (siehe z.B. US-A-3817205 bzw. FR-A-996 279) sind an sich sehr einfach und bieten große Betriebssicherheit.

Die Erfindung zielt darauf ab, die Montage und Demontage solcher Anzeiger zu erleichtern, und ist primär dadurch gekennzeichnet, daß die Abwinkelungen an der Vorderkante der seitlichen Gehäuseteile an ihren oberen und unteren Enden durch Scharniere o. dgl. zueinander schwenkbar verbunden sind und daß die Hinterkanten der seitlichen Gehäuseteile mit der Druckplatte formschlüssig gekuppelt zusammenwirken.

Auf diese Weise ergibt sich eine Anzeigerkonstruktion, bei der sogar ein Glaswechsel am eingebauten Anzeiger leicht möglich ist, weil nach Lokkern der Preßschrauben und der sich dabei ergebenden Lösung des Fomschlusses die beiden seitlichen Gehäuseteile um die an den Enden vorgesehenen Scharniere nach außen geklappt und dadurch abgenommen werden können. Auch die Montage von längeren Anzeigerkonstruktionen ist durch die Möglichkeit des Aufsetzens des aufgeklappten Anzeigergehäuses wesentlich erleichtert.

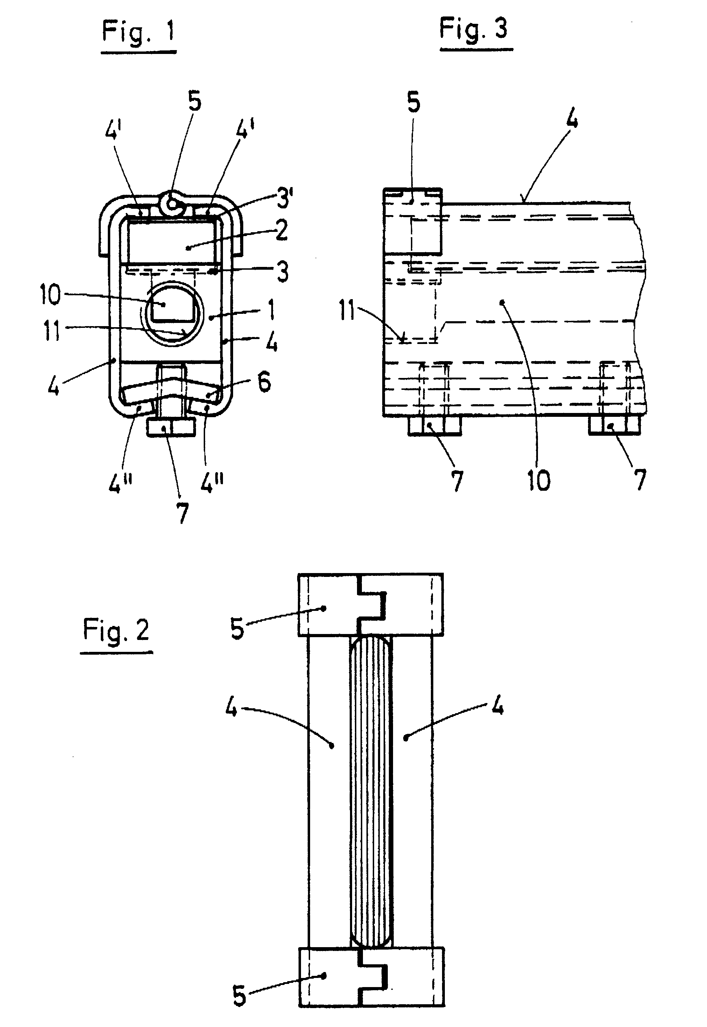

Die Erfindung wird nun anhand des in der Zeichnung dargestellten Beispiels näher erläutert, wobei die Fig. 1 bis 3 einen erfindungsgemäßen Flüssigkeitsstandanzeiger in Drauf-, Vorder- bzw. Seitenansicht zeigen.

Der Anzeiger weist eine prismatische Mittelplatte 1 auf, die eine in Längsrichtung verlaufende Einfräsung 10 aufweist, welche an den Stirnseiten in mit einem Gewinde versehene Anschlußöffnung 11 übergeht. Die Einfräsung 10 ist von einer Glasplatte 2 unter Zwischenschaltung einer Dichtung 3 abgedeckt, so daß sich zwischen den beiden Anschlußenden 11 des Anzeigers ein geschlossener, durch das Glas abgedeckter Flüssigkeitskanal ergibt. Die nötige Preßkraft zum Abdichten der beiden prismatischen Plattenteile 1, 2 wird durch zwei aus Blech hergestellte, seitliche Gehäuseteile 4 übertragen, die vorne und hinten abgekantet sind. Die vorderen Abwinkelungen 4' liegen unter Zwischenschaltung einer weichen Beilage 3' auf der Glasplatte 2 auf. Die an den Hinterkanten vorgesehenen Abwinkelungen 4" schließen einen Winkel kleiner als 90° mit dem eigentlichen Seitenteil ein und wirken mit einer im Querschnitt V-förmigen Druckplatte 6 zusammen, an der die zugeordneten Abwinkelungen 4" der seitlichen Gehäuseteile anliegen. Auf diese einfache Weise ist gewährleistet, daß bei Anziehen der Preßschrauben 7 zum Abdichten des Flüssigkeitskanals die beiden Hinterkanten der seitlichen Gehäuseteile 4 sicher nicht nach außen ausweichen können.

Dieses formschlüssig gekuppelte Zusammenwirken der Hinterkanten der seitlichen Gehäuseteile 4 mit der Druckplatte 6 ist deshalb so wichtig, weil im Gegensatz zu den bekannten Anzeigern die beiden seitlichen Gehäuseteile 4 an den Abwinkelungen 4' der Vorderkante am oberen und unteren Ende durch Scharniere 5 schwenkbar verbunden sind und so ein Auseinanderklappen der beiden seitlichen Gehäuseteile möglich wäre.

Aus den Zeichnungen ist zu erkennen, daß die erfindungsgemäße Anzeigerkonstruktion mit auseinander- und zusammenklappbarem Gehäuse montagetechnisch wesentliche Vorteile im Vergleich zu Anzeigern mit einstückigem rohrförmigen Gehäuse bietet.

## Patentansprüche

1. Flüssigkeitsstandanzeiger mit zwei in Längsrichtung unter Pressung aneinanderliegenden prismatischen Plattenteilen (1,2), von denen der vordere (2) aus Glas besteht, und die unter Bildung eines nach außen abgedichteten Flüssigkeitskanals (10) in einem rohrförmigen Gehäuse angeordnet sind, mit zwei seitlichen, die abdichtende Preßkraft übertragenden Gehäuseteilen (4), deren abgewinkelte Vorderkanten (4') mit der außenliegenden ebenen Schaufläche der Glasplatte und deren Hinterkanten (4") mit einer Preßschrauben (7) aufnehmenden Druckplatte (6) zusammenwirken, dadurch gekennzeichnet, daß die Abwinkelungen (4') an der Vorderkante der seitlichen Gehäuseteile (4) an ihren oberen und unteren Enden, vorzugsweise mittels Scharnieren (5), zueinander schwenkbar verbunden sind und daß die Hinterkanten der seitlichen Gehäuseteile (4) mit der Druckplatte (6) formschlüssig gekuppelt zusammenwirken.

2. Flüssigkeitsstandanzeiger nach Anspruch 1, dadurch gekennzeichnet, daß die Hinterkanten der seitlichen Gehäuseteile Abwinkelungen (4") aufweisen, die einen Winkel kleiner als 90° einschließen, und daß die Druckplatte (6) im Querschnitt V-förmig ausgebildet ist und an ihr die zugeordneten Abwinkelungen (4") der seitlichen Gehäuseteile anliegen.

## Claims

1. Fluid level indicator having two prismatic plate parts (1,2) lying against each other in the longitudinal direction under pressure, the front one of which (2) consists of glass and which, forming a fluid channel (10) sealed towards the outside, are arranged in a tubular housing, having two lateral housing parts (4) which transmit the sealing pressing force and the angled front edges (4') of which co-operate with the flat viewing surface, located on the outside, of the glass plate, and the rear edges (4") of which co-operate with a pressure plate (6) receiving pressure screws (7), characterised in that the angled portions (4') at the front edge of the lateral housing parts (4) are pivotably connected to each other at their upper and lower ends, preferably by means of hinges (5), and that the rear edges of the lateral housing parts (4) co-operate in a positively coupled manner with the pressure plate (6).

2. Fluid level indicator according to Claim 1, characterised in that the rear edges of the lateral housing parts have angled portions (4") which enclose an angle of less than 90°, and that the pressure plate (6) is V-shaped in cross-section and the associated angled portions (4") of the lateral housing parts bear against it.

## Revendications

1. Indicateur de niveau de liquide comprenant deux plaques (1,2) prismatiques placées l'une sur l'autre dans le sens longitudinal et soumises à une compression, la plaque avant (2) étant en verre, et qui sont disposées dans un boîtier tubulaire pour former un conduit de liquide (10) étanche vis à vis de l'extérieur, deux parties latérales (4) de boîtier supportant la force de compression d'étanchéité, dont les bords avant (4') rabattus appuient sur la face extérieure de la plaque de verre et dont les bords arrière (4") appuient sur une plaque de pression (6) portant une vis de pression (7), caractérisé par le fait que les bords rabattus (4') sont reliés ensemble de façon articulée à l'avant de la partie latérale (4) du boîtier, à son extrémité supérieure et inférieure, de préférence par des charnières (5), et que les bords arrière de la partie latérale (4) du boîtier coopèrent de façon positive avec la plaque de pression (6).

2. Indicateur de niveau de liquide selon la revendication 1, caractérisé par le fait que les bords arrière de la partie latérale du boîtier présentent des bords rabattus (4") qui forment un angle inférieur à 90° et par le fait que la section transversale de la plaque de pression (6) est en forme de V et que les bords rabattus (4") de la partie latérale du boîtier sont appliqués sur celle-ci.

## Fig. 1

## Fig. 3

## Fig. 2